# EUROPÄISCHE PATENTSCHRIFT

(11) **EP 0 780 941 B1**
(45) Veröffentlichungstag und Bekanntmachung des Hinweises auf die Patenterteilung: **14.04.1999**
(21) Anmeldenummer: 95120383.5
(22) Anmeldetag: 22.12.1995
(51) Int. Cl.: H02B 13/035

(54) **Stabisolator mit einem Unterbrecher für Hochspannung und wenigstens einem Messtransformator**
Insulating post with a circuit breaker for high voltage and at least one measuring transformer
Isolateur colonne avec un interrupteur pour haute tension et au moins un transformateur de mesure

(43) Veröffentlichungstag der Anmeldung: 25.06.1997
(73) Patentinhaber: ABB ADDA S.p.A., 20075 Lodi (IT)
(72) Erfinder: Sfondrini, Libero, I-20075 Lodi (IT); Piazza, Costante, I-20075 Lodi (IT); Moritz, Bertil, 72348 Västeras (SE)
(74) Vertreter: Modiano, Guido, Dr.-Ing.

(56) Entgegenhaltungen:
- EP-A- 0 302 391
- DE-A- 3 541 957
- GB-A- 1 112 112
- GB-A- 2 083 951

## Beschreibung

Die vorstehende Erfindung betrifft einen Stabisolator gemäß dem Oberbegriff des Anspruchs 1 mit einem Unterbrecher für Hochspannung, der unter Zuhilfenahme eines Gases isoliert ist und Unterbrecher in SF₆ Isolierung sowie Meßtransformatoren aufweist (vgl. GB-A-1 112 112).

In Umspannstationen für die Verteilung elektrischer Energie ist jedem Stabisolator ein Unterbrecher zugeordnet, dem Stromtransformatoren (TA) zugeordnet sind und Spannungstransformatoren (TV) zur Messung des elektrischen Stromes und der elektrischen Spannung, sowie zur Versorgung der Schutzeinrichtungen.

Für jeden Isolator einer Leitung sind die Transformatoren und der Unterbrecher auf getrennten Halterungen montiert, dies führt zu einem erheblichen Platzbedarf und einem großen Konstruktionsaufwand der Umspannstation.

Es wurde bereits vorgeschlagen, Unterbrecher und Transformator (TA) miteinander zu integrieren und auf einer einzigen Halterung des Stabisolators anzubringen, dieser Vorschlag wurde besonders für Bauformen gemacht, die mit Öl gefüllt sind oder für Kombinationslösungen SF₆/Öl. Diese bekannte Ausführungsform konnte sich aber aufgrund erheblicher technischer Schwierigkeiten und hohen Fertigungskosten auf dem Markt nicht durchsetzen.

Andere bekannte Lösungen, bei denen als Isoliermittel Ölpapier eingesetzt wird, erfordern aufwendige Wickelvorgänge unter Zwischenlegen von Papier oder Kunststoffilmen. Ferner sind für diese Einrichtungen lange Trockenvorgänge und aufwendige Imprägniervorgänge unter Vakuum vorzusehen. Diese bekannten technischen Lösungen können ferner zu elektrischen Teilentladungen führen, die aufgrund der Unregelmäßigkeit des aus mehreren Schichten gebildeten Isoliermateriales auftreten.

Aufgabe der vorstehenden Erfindung ist es, die geschilderten Nachteile des Standes der Technik zu vermeiden und die Abmessungen und den Bauaufwand für eine Umspannstation AT zu verringern, unter Einsatz von Meßtransformatoren (sowohl TA als auch TV), die SF₆ gasisoliert sind und einen Stromtransformator (TA) und/oder einen Spannungstransformator (TV) aufweisen, wobei der Transformator (TA/TV) in den Stabisolator, der einen Unterbrecher in SF₆-Bauweise aufnimmt, eingebaut ist.

Die Lösung dieser Aufgaben wird erfindungsgemäß mit einem Stabisolator für einen Hochspannungsunterbrecher gelöst, der die Merkmale gemäß Patentanspruch 1 aufweist.

Weitere vorteilhafte Merkmale können den Unteransprüchen entnommen werden.

Die erfindungsgemäß vorgeschlagene Lösung erlaubt es, die Nachteile des Standes der Technik, besonders einer Isolierung unter Verwendung von Ölpapier zu vermeiden und die Möglichkeit zu schaffen, auf aufwendige Wickelvorgänge unter Verwendung von Ölpapier oder Konststoffilmen zu verzichten. Des weiteren sind keine Trockenvorgänge oder unter Unterdruck ablaufende Imprägniervorgänge mehr erforderlich. Des weiteren werden durch die Erfindung prinzipiell Teilentladungen aufgrund einer Ungleichmäßigkeit des geschichteten Isoliermateriales vermieden.

Der Fertigungsvorgang ist auf wenige branchenübliche Montagevorgänge beschränkt, die gemeinsam mit der Montage des Stabisolators durchführbar sind und konstante Fertigungsvorgänge mit minimalem Zeitaufwand ermöglichen.

Ferner besteht die Möglichkeit, die Qualität der Isolierung kontinuierlich unter Verwendung eines einzigen mit Meßkontakten versehenen Dichtemeßgerätes durchzuführen, das für die gesamte Baugruppe des mit einem Unterbrecher versehenen Stabisolators TA/TV verwendbar ist.

Die Leistungsmerkmale und die Fertigungsvorgänge für den erfindungsgemäßen Stabisolator entsprechen im wesentlichen jenen der eigenständigen Transormatoren TA und TV.

Ferner wird durch das gasförmige Isoliermaterial gewährleistet, daß aufgrund der Beweglichkeit und Anpassungenfähigkeit des Dielektrikums automatisch ein Wiedereinstellen der dielektrischen Isolierung auch in Zonen eines ungleichförmigen örtlichen Verlaufes eintritt.

Der Erfindungsgegenstand wird nun genauer beschrieben und anhand von Ausführungsbeispielen in den Zeichnungen dargestellt.
Fig. 1 zeigt in einem Längsschnitt einen erfindungsgemäß ausgebildeten Stabisolator;
Fig. 2 zeigt einen Schnitt entlang der Linie II-II der Fig. 1;
Fig. 3 zeigt in einer Seitenansicht im Schnitt die Halterung gemäß Fig. 1;
Fig. 4 zeigt im Schnitt eine Ausführungsform einer Sekundärwicklung;
Fig. 5 zeigt ein Ausführungsbeispiel der erfindungsgemäßen Lagerung im Längsschnitt;
Fig. 6 zeigt eine Seitenansicht eines Details gemäß Fig. 1;
Fig. 7 zeigt einen Schnitt entlang der Linie VII-VII der Fig. 5;
Fig. 8 zeigt eine Ansicht im Längsschnitt eines weiteren Ausführungsbeispieles der erfindungsgemäßen Lagerung;
Fig. 9 zeigt eine Schnittdarstellung gemäß der Linie IX-IX der Fig. 8 und
Fig. 10 zeigt im Schnitt eine abgeänderte Ausführungsform der Antriebsmittel für die beweglichen Kontakte.

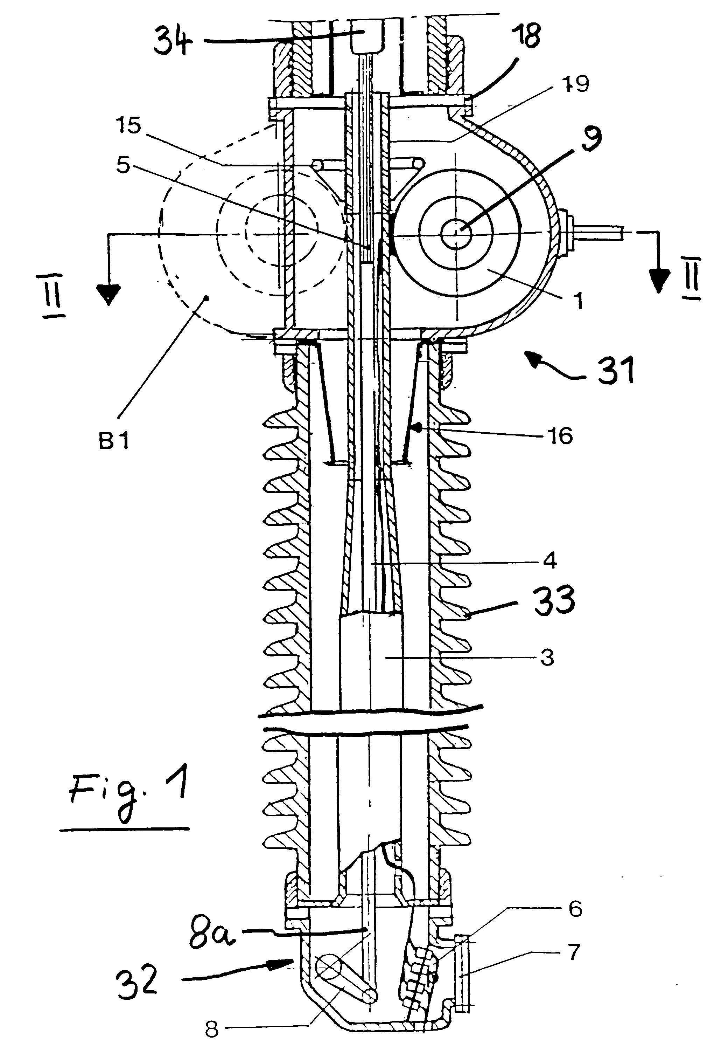

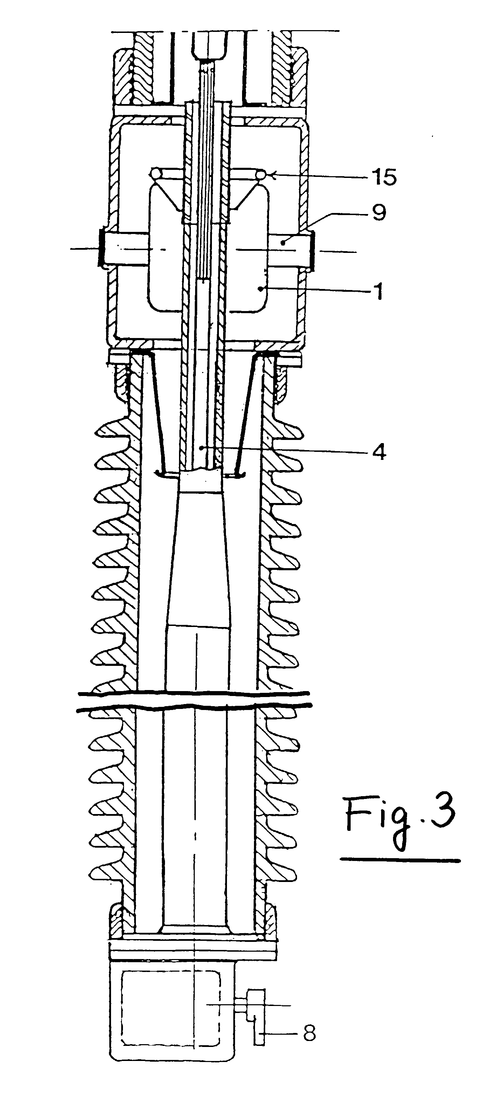

Unter Bezug auf die Figuren 1, 2 und 3 kann der Stabisolator und Unterbrecher (TA) erfindungsgemäß in drei Bauteile unterteilt werden, und zwar in eine Unterbrecherkammer mit einem Unterbrecher, wobei die Kammer nur teilweise in den Abbildungen dargestellt ist, in eine Zone 31, die einen Stromtransformator TA aufnimmt und in ein Gehäuse 32, das Mittel zum Betätigen der beweglichen Kontakte der Kammer und Klemmen aufweist.

Die Unterbrecherkammer weist in bekannter Weise zwei bewegliche Kontakte auf, wobei der untere Kontakt 34 teilweise in den Abbildungen dargestellt ist. Da die Kammer und die beweglichen Kontakte im wesentlichen den Vorrichtungen bereits bekannter Geräte entsprechen, ist auf deren genauere Darstellung verzichtet worden.

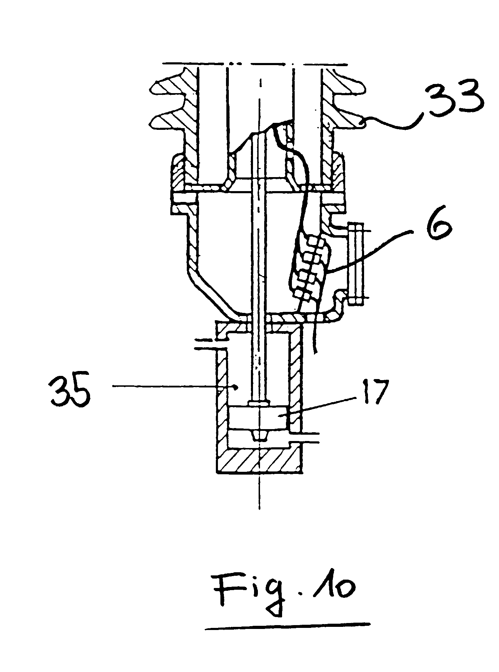

Das Gehäuse 32 nimmt eine Kurbel 8 zum Betätigen der beweglichen Kontakte auf, die über eine Stange 8a, die den Isolierkörper 33 durchdringt, betätigbar ist. Alternativ dazu, wie in der Teilansicht gemäß Fig. 10 dargestellt ist, kann die Betätigung auch über einen Hydraulikzylinder 35, der einen beweglichen Kolben 17 aufnimmt, erfolgen.

In den Figuren 1 bis 3 ist der Unterbrecher in Offenstellung dargestellt und eine Drehbewegung der Kurbel 8 oder ein Verschieben des Kolbens 17 nach oben führen zu einem Schließen der beweglichen Kontakte über die Stange 4, 5. Die Öffnungsbewegung der Kontakte erfolgt durch umgekehrten Antrieb.

Zwischen der Unterbrecherkammer und dem Gehäuse 32 ist ein Meßtransformator 31 (im dargestellten Beispiel ein Transformator TA) vorgesehen und erfindungsgemäß ausgebildet.

Der elektromagnetische Teil TA besteht aus einem oder mehreren Kernen und ist im Inneren einer toroidal ausgebildeten Abschirmung 1 angeordnet.

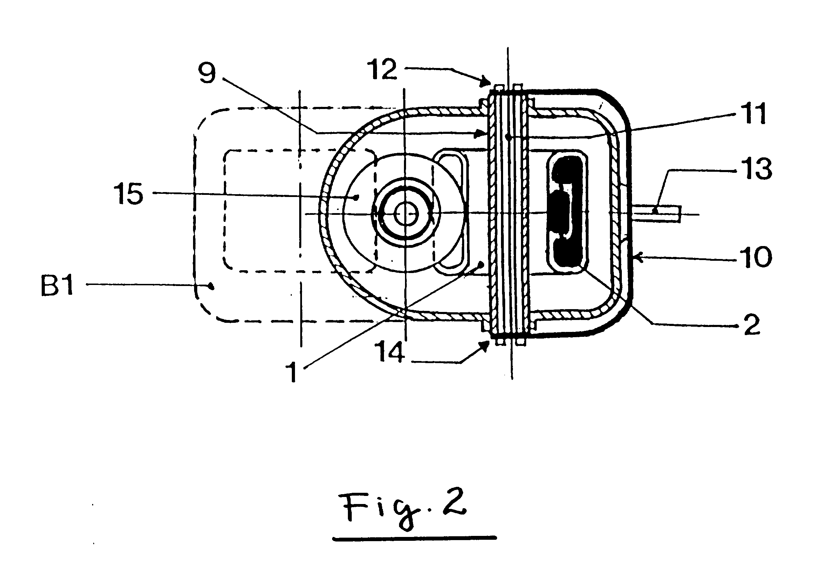

In den Figuren 1 und 2 ist ein einzelner Transformator TA vorgesehen und die Lage eines möglichen zweiten Transformators, der ähnlichen Aufbau aufweist, ist in Fig. 1 und 2 mit gestrichelten Linien angedeutet.

Die Sekundärwicklungen 2 des Kernes werden über ein Metallrohr 3 an Masse gelegt. Das Metallrohr 3 weist hohe Steifigkeit auf und durchdringt axial den Stabisolator 33.

Im Inneren weist das Rohr eine Stange 4, sowie die Leitungen der Wicklungen auf, deren Endstücke über Isolierkörper 6 gegenüber der Kammer, die das Isoliergas SF₆ aufnimmt, abgedichtet ist. Der Kern 1 ist tangential zum Rohr 3 angeordnet.

Neben einer Halterung im Gehäuse 7 ist das Metallrohr 3 auch noch von einem fest angeordneten Isolierohr 19 gehalten. Dieses Rohr 19 ist an seiner Oberseite vom Flansch 18 gehalten.

Die Primärwicklung besteht aus einem leitenden Rohr 9, das in horizontaler Lage angeordnet ist, ferner sind Stangen 10 und Leiterstangen 11 vorgesehen, die im Inneren des Rohres 9 angeordnet sind. Die Stangen 10 sind mit den Enden des Rohrs 9 verbunden. Durch das Rohr 9 wird eine Trennung zwischen dem Inneren des Transformators, der das Gas SF₆ aufnimmt, und dem Inneren des Rohrs, das unter atmosphärischem Druck steht, geschaffen.

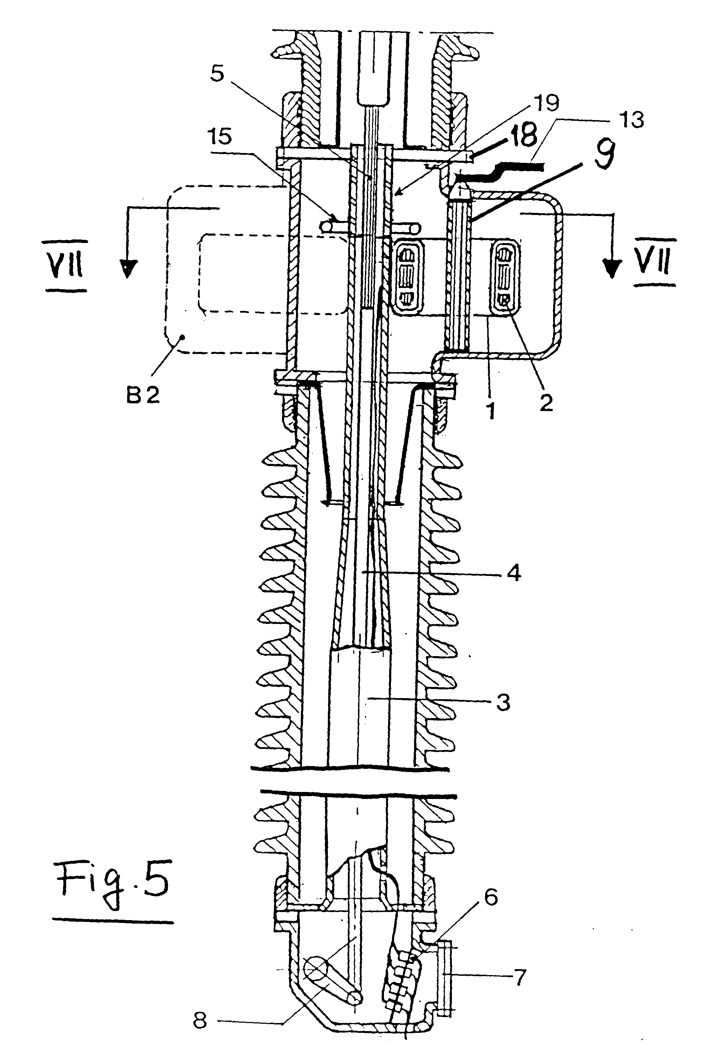

Die Primärwicklung ist elektrisch mit dem Gehäuse und somit mit dem Unterbrecherpol über einen Schalter 12 verbunden und steht mit dem äußeren Fortsatz 13 (siehe Fig. 5) über eine isolierte Umschaltvorrichtung 14 in Verbindung.

Somit ist es bei Einwirken auf diese Vorrichtungen 12 und 14 möglich, die Wicklungen der Sekundärwicklung entsprechend unterschiedlicher Schaltschemen zu schalten.

Dadurch wird an der Primärwicklung eine Änderung des Umwandlungsverhältnisses des Transformators TA möglich.

Sofern es notwendig oder gewünscht wird, ist es möglich, weitere Änderungen des Transformationsverhältnisses an der Sekundärwicklung durchzuführen. In diesem Fall wäre auf die Schaltung im Gehäuse 7 der Anschlußkontakte einzuwirken.

Gemäß einer Ausgestaltung der Erfindung wird weiter ein Spannungsverteilsystem vorgeschlagen sowohl im Inneren als auch im Äußeren des Transformators TA. Genauer gesagt, ist eine ringförmige Abschirmung 15 zur Verteilung der Spannung entlang der Isolierstange 5 und dem Isolierrohr 4 vorgesehen sowie eine rohrförmige Abschirmung 16 zur Aufteilung der Spannung entlang dem Isolator 33.

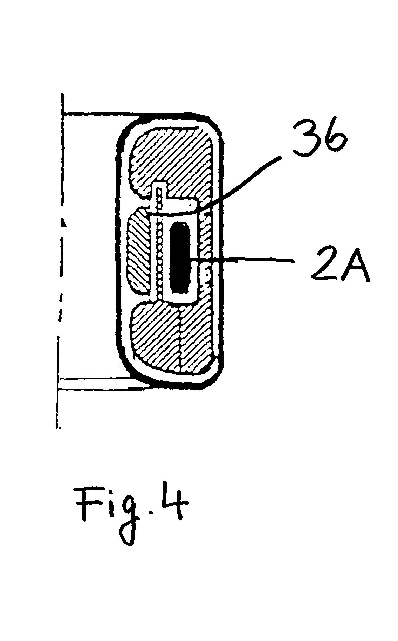

Fig. 4 zeigt im Schnitt den Kern, der eine sogenannte Rogowsky-Spule 2a aufnimmt, die einen kapazitiven Sensor 36 für ein gleichzeitiges Erfassen des Stromes und der Spannung aufweist.

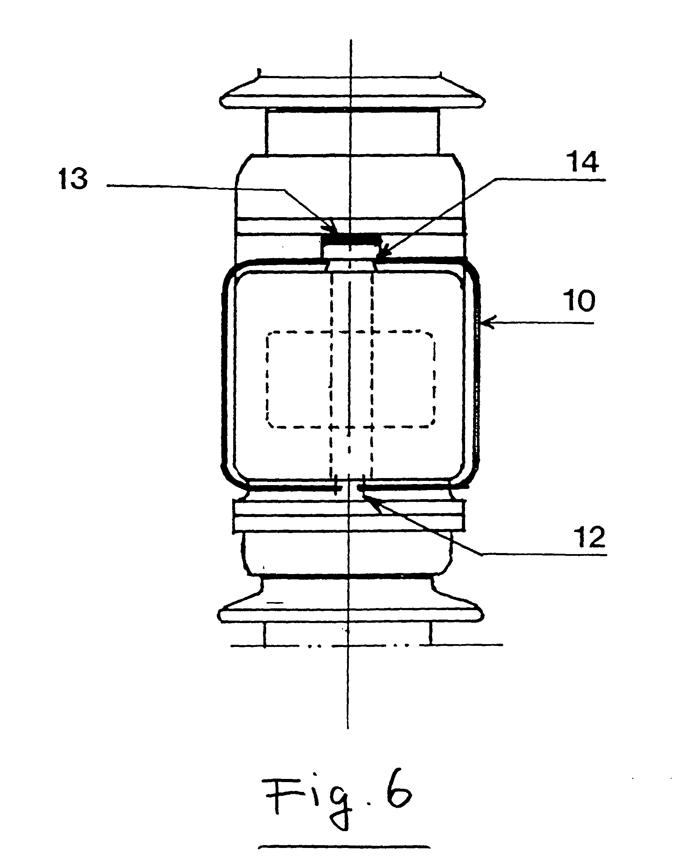

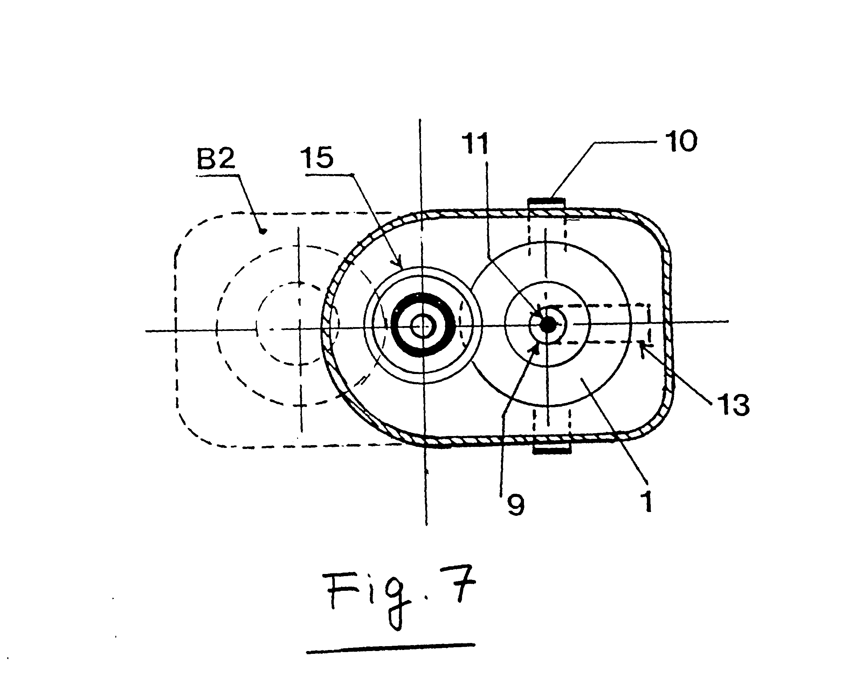

In Fig. 5 bis 7 ist eine abgeänderte Ausführungsform der Erfindung dargestellt, in dieser zeichnerischen Darstellung wurden die gleichen Bezugszeichen wie in den Figuren 1 bis 3 zur Kennzeichnung gleicher oder entsprechender Bauteile verwendet.

Der wesentliche Unterschied gegenüber den Ausführungsformen nach Fig. 1 bis 3 besteht in der Anordnung des tangential verlaufenden Kernes in einer horizontalen Ebene, d.h. mit Anordnung des axialen Rohres 9 in vertikaler Anordnung. Mit gestrichelten Linien wird die Lage eines (möglichen) zweiten Kernes B2 veranschaulicht.

Es ist selbstverständlich auch möglich, eine gegenüber der Horizontalebene geneigte Anordnung des tangential vorgesehenen Kernes vorzusehen.

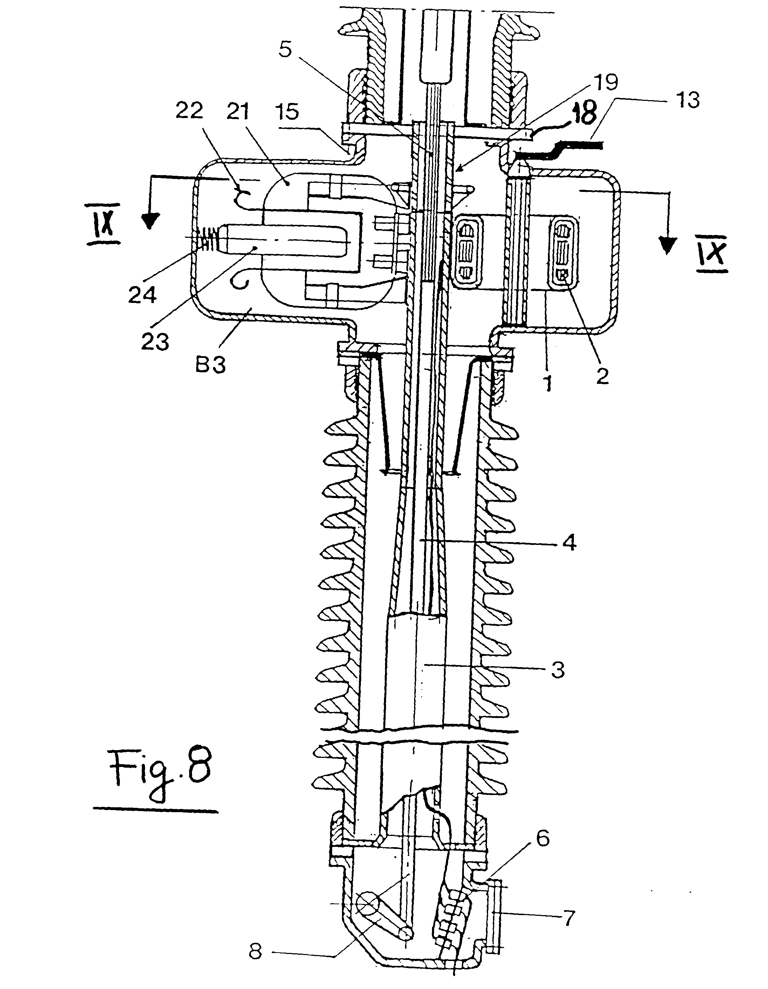

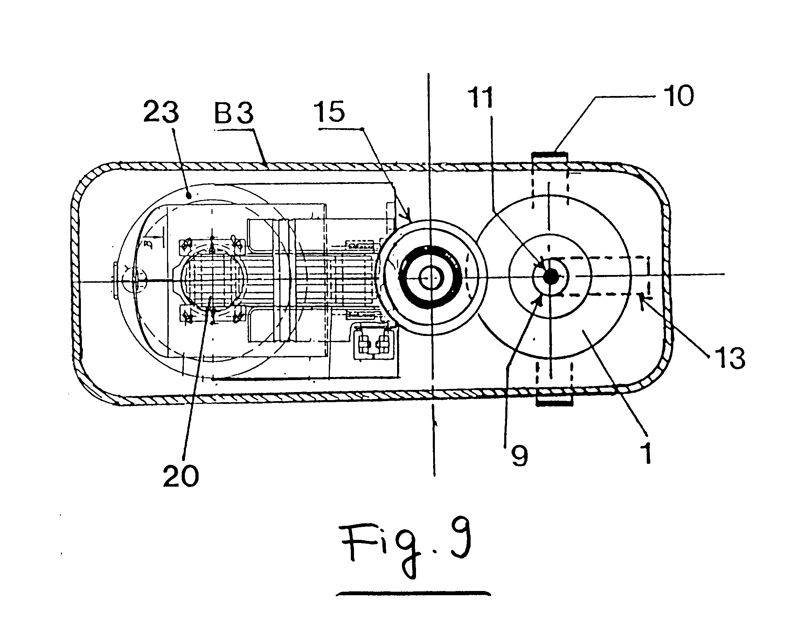

Eine weitere abgeänderte Ausführungsform ist in den Zeichnungen 8 und 9 dargestellt. Auch hier wurden die gleichen Bezugszeichen für gleiche Bauteile wie vorhergehend verwendet. Einem Stromtransformator (der Bauart gemäß Fig. 1 bis 3 oder 5 bis 7) ist ein induktiver Spannungstransformator TV zugeordnet, der in SF₆-Isolierung ausgebildet ist, und in den Figuren 8 und 9 mit dem Bezugszeichen B3 gekennzeichnet ist. Der an Masse gelegte Teil des Transformators B3 ist mechanisch am Lagesicherungsrohr 3 befestigt.

Der elektromagnetische Teil des Transformators TV besteht aus einem Kern 20, auf dem eine oder mehrere Sekundärwicklungen 21 angeordnet sind, die über das Metallrohr 3 an Masse gelegt sind und mit dem Gehäuse der Klemmen 7 über isolierte Durchgänge 6, die gegenüber dem Gas SF₆ abgedichtet sind, verbunden sind.

Die Primärwicklung 23 ist vollständig abgeschirmt und mit dem spannungsführenden Teil über eine Feder 24 verbunden.

Die Abschirmung 22 ermöglicht eine bessere Verteilung der Spannung zwischen Primärteil und Sekundärteil.

## Patentansprüche

1. Stabisolator (33) einem Unterbrecher für Hochspannung und wenigstens einem Meßtransformator, in SF₆-Isolierung, wobei der Stabisolator (33) einen in SF₆ isolierten Stromtransformator aufnimmt, der in den Stabisolator (33) eingesetzt ist und wenigstens einen magnetischen Kern aufweist, der an Masse gelegt ist in eine toroidale Abschirmung (1) eingesetzt ist, die in ihrem Inneren die Sekundärwicklungen (2) aufnimmt, wobei
eine Primärwicklung vorgesehen ist, die axial im Inneren des toroidal ausgebildeten Kernes angeordnet ist **dadurch gekennzeichnet**, daß der Transformator zwischen einer Kammer (30) und Antriebsmitteln angeordnet ist, daß der magnetische Kern von einem Metallrohr (3) mit hoher Steifigkeit gehalten wird und tangential gegenüber dem Rohr (3) angeordnet ist, daß die Primärwicklung aus einem leitenden Rohr (9) besteht, und Leiterstangen (11) aufweist, die im Inneren des Rohres (9) angeordnet sind, und mit Stangen (10) versehen ist, die am Ende des Rohrs (9) verbunden sind.

2. Stabisolator mit einem Unterbrecher nach Patentanspruch 1, **dadurch gekennzeichnet,** daß das Leitungsrohr (9) eine Trennung zwischen der inneren Zone des Transformators, der das Isoliergas SF₆ aufnimmt, und dem Inneren des Rohres (9), welches unter atmosphärischem Druck steht, schafft.

3. Stabisolator für einen Unterbrecher nach Patentanspruch 1 oder 2, **dadurch gekennzeichnet**, daß die Primärwicklung elektrisch mit dem Gehäuse und dem Unterbrecherpol über einen ersten Schalter (12) und am äußeren Fortsatz (13) über einen zweiten Schalter (14) verbunden ist, um an der Primärwicklung eine Änderung des Transformationsverhältnisses zu erlauben.

4. Stabisolator für einen Unterbrecher nach Patentanspruch 1 bis 3, **dadurch gekennzeichnet**, daß eine ringförmige Abschirmung (15) vorgesehen ist, mit der ein Aufteilen der Spannung entlang der Isolierstange (5) und dem Isolierrohr (4) erfolgt.

5. Stabisolator für einen Unterbrecher nach Patentanspruch 1 bis 3, **dadurch gekennzeichnet**, daß eine rohrförmige Abschirmung (16) zum Verteilen der Spannung entlang dem Isolator (33) vorgesehen ist.

6. Stabisolator für einen Unterbrecher nach Patentanspruch 1 bis 5, **dadurch gekennzeichnet**, daß der tangential angeordnete Kern in einer horizontalen Ebene angeordnet ist.

7. Stabisolator für einen Unterbrecher nach Patentanspruch 1 bis 5, **dadurch gekennzeichnet**, daß der tangential angeordnere Kern in einer vertikalen Ebene angeordnet ist.

8. Stabisolator für einen Unterbrecher nach Patentanspruch 1 bis 7, **dadurch gekennzeichnet**, daß zwei Meßtransformatoren in Zweieranordnung vorgesehen sind.

9. Stabisolator für einen Unterbrecher nach Patentanspruch 8, **dadurch gekennzeichnet**, **daß beide Transformatoren als** Stromtransformatoren (TA) ausgebildet sind.

10. Stabisolator für einen Unterbrecher nach Patentanspruch 8, **dadurch gekennzeichnet**, daß beide Transformatoren als Spannungstransformatoren (TV) ausgebildet sind.

11. Stabisolator für einen Unterbrecher nach Patentanspruch 8, **dadurch gekennzeichnet**, daß einer der Transformatoren als Stromtransformator (TA) und der andere Transformator als induktiver Spannungstransformator (TV) ausgebildet ist.

12. Stabisolator für einen Unterbrecher nach Patentanspruch 1 bis 5, **dadurch gekennzeichnet**, daß der Kern eine Rogowsky-Spule (2A) aufnimmt, die mit einem kapazitiv arbeitenden Sensor zum gleichzeitigen Erfassen des elektrischen Stromes und der elektrischen Spannung aufweist.

## Claims

1. Rod insulator (33) having an interrupter for high voltage and at least one measuring transformer, in SF₆ insulation, it being the case that the rod insulator (33) accommodates a current transformer which is insulated in SF₆ and is inserted into the rod insulator (33) and has at least one magnetic core which is connected to frame and inserted into a toroidal screen (1) which accommodates the secondary windings (2) in its interior, a primary winding being provided which is arranged axially in the interior of the toroidally constructed core, characterized in that the transformer is arranged between a chamber (30) and drive means, in that the magnetic core is held by a metal tube (3) of high stiffness and is arranged tangentially with respect to the tube (3), and in that the primary winding comprises a conducting tube (9) and has conductor bars (11) which are arranged in the interior of the tube (9) and is provided with bars (10) which are connected at the end of the tube (9).

2. Rod insulator having an interrupter according to Patent Claim 1, characterized in that the conducting tube (9) creates a separation between the inner zone of the transformer, which holds the insulating gas SF₆, and the interior of the tube (9), which is under atmospheric pressure.

3. Rod insulator for an interrupter according to Patent Claim 1 or 2, characterized in that the primary winding is electrically connected to the housing and the interrupter pole via a first switch (12), and is electrically connected to the external extension (13) via a second switch (14) in order to permit a change in the transformation ratio at the primary winding.

4. Rod insulator for an interrupter according to Patent Claims 1 to 3, characterized in that provision is made of an annular screen (15) which divides the voltage along the insulating pole (5) and the insulating tube (4).

5. Rod insulator for an interrupter according to Patent Claims 1 to 3, characterized in that a tubular screen (16) is provided for distributing the voltage along the insulator (33).

6. Rod insulator for an interrupter according to Patent Claims 1 to 5, characterized in that the tangentially arranged core is arranged in a horizontal plane.

7. Rod insulator for an interrupter according to Patent Claims 1 to 5, characterized in that the tangentially arranged core is arranged in a vertical plane.

8. Rod insulator for an interrupter according to Patent Claims 1 to 7, characterized in that two measuring transformers are provided in a dual arrangement.

9. Rod insulator for an interrupter according to Patent Claim 8, characterized in that both transformers are constructed as current transformers (TA).

10. Rod insulator for an interrupter according to Patent Claim 8, characterized in that both transformers are constructed as voltage transformers (TV).

11. Rod insulator for an interrupter according to Patent Claim 8, characterized in that one of the transformers is constructed as a current transformer (TA), and the other transformer is constructed as an inductive voltage transformer (TV).

12. Rod insulator for an interrupter according to Patent Claims 1 to 5, characterized in that the core accommodates a Rogovski coil (2A) which co-operates with a capacitively operating tensor for the purpose of simultaneously detecting the electric current and the electric voltage.

## Revendications

1. Isolateur bâton (33) avec isolement au SF₆, avec un disjoncteur haute tension et au moins un transformateur de mesure, l'isolateur bâton (33) comportant un transformateur de courant qui est isolé au SF6 et qui est inséré dans l'isolateur bâton (33) et qui comporte au moins un noyau magnétique mis à la masse et est logé dans un blindage toroïdal (1) à l'intérieur duquel sont disposés les enroulements secondaires (2), un enroulement primaire étant prévu, lequel est disposé axialement à l'intérieur du noyau de forme toroïdale, caractérisé en ce que le transformateur est disposé entre une chambre (30) et des moyens d'entraînement, en ce que le noyau magnétique est maintenu par un tube métallique (3) à rigidité élevée et est disposé tangentiellement audit tube (3), en ce que l'enroulement primaire est constitué d'un tube conducteur (9), comporte des tiges conductrices (11) disposées à l'intérieur du tube (9) et est muni de tiges (10) reliées à l'extrémité du tube (9).

2. Isolateur bâton avec un disjoncteur selon la revendication 1, caractérisé en ce que le tube conducteur (9) crée une séparation entre la zone intérieure du transformateur qui renferme le gaz isolant SF₆ et l'intérieur du tube (9) où règne une pression atmosphérique.

3. Isolateur bâton pour un disjoncteur selon la revendication 1 ou 2, caractérisé en ce que l'enroulement primaire est connecté électriquement au boîtier et au pôle d'interrupteur par l'intermédiaire d'un premier commutateur (12) et, sur un prolongement extérieur (13), par l'intermédiaire d'un second commutateur (14) pour permettre de modifier le rapport de transformation au niveau de l'enroulement primaire.

4. Isolateur bâton pour un disjoncteur selon les revendications 1 à 3, caractérisé en ce qu'il est prévu un blindage annulaire (15) qui provoque une répartition de la tension le long de la tige isolante (5) et du tube isolant (4).

5. Isolateur bâton pour un disjoncteur selon les revendications 1 à 3, caractérisé en ce qu'il est prévu un blindage annulaire (16) pour répartir la tension le long de l'isolateur (33).

6. Isolateur bâton pour un disjoncteur selon les revendications 1 à 5, caractérisé en ce que le noyau disposé tangentiellement est disposé dans un plan horizontal.

7. Isolateur bâton pour un disjoncteur selon les revendications 1 à 5, caractérisé en ce que le noyau disposé tangentiellement est disposé dans un plan vertical.

8. Isolateur bâton pour un disjoncteur selon les revendications 1 à 7, caractérisé en ce qu'il est prévu deux transformateurs de mesure jumelés.

9. Isolateur bâton pour un disjoncteur selon la revendication 8, caractérisé en ce que les deux transformateurs sont conçus sous la forme de transformateurs de courant (TA).

10. Isolateur bâton pour un disjoncteur selon la revendication 8, caractérisé en ce que les deux transformateurs sont conçus sous la forme de transformateurs de tension (TV).

11. Isolateur bâton pour un disjoncteur selon la revendication 8, caractérisé en ce que l'un des transformateurs est conformé en transformateur de courant (TA) et l'autre transformateur est conformé en transformateur inductif de tension (TV).

12. Isolateur bâton pour un disjoncteur selon les revendications 1 à 5, caractérisé en ce que le noyau est une bobine de Rogovsky (2A) qui comporte un capteur fonctionnant en mode capacitif pour détecter simultanément le courant électrique et la tension électrique.
